# EUROPÄISCHE PATENTSCHRIFT

(11) **EP 0 617 262 B1**
(45) Veröffentlichungstag und Bekanntmachung des Hinweises auf die Patenterteilung: **12.08.1998**
(21) Anmeldenummer: 94100337.8
(22) Anmeldetag: 12.01.1994
(51) Int. Cl.: G01G 11/08

(54) **Störausblendung bei einer Differentialdosierwaage mit Fuzzy Regelung**
Cancelling interference in a loss in weight feeder with fuzzy control
Suppression de l'interférence dans un dosimètre à taux d'allégement avec réglage de fuzzy

(30) Priorität: 22.03.1993 DE 4309109
(43) Veröffentlichungstag der Anmeldung: 28.09.1994
(73) Patentinhaber: Schenck Process GmbH, 64293 Darmstadt (DE)
(72) Erfinder: Wehhofer, Josef, Dr., D-64289 Darmstadt (DE); Werner, Hans, D-64285 Darmstadt (DE); Tews, Volker, Dr., D-64285 Darmstadt (DE)

(56) Entgegenhaltungen:
- EP-A- 0 289 048
- EP-A- 0 290 999
- EP-A- 0 291 553
- EP-A- 0 421 063
- DE-A- 3 926 038
- PROCEEDINGS OF THE INSTITUTION OF ELECTRICAL ENGINEERS, Bd.121, Nr.12, Dezember 1974, STEVENAGE GB Seiten 1585 - 1588 E.H.MAMDANI ET AL. 'Application of fuzzy algorithmus for control of simple dynamic plant'

## Beschreibung

Die Erfindung betrifft ein Verfahren zur Störausblendung bei einer Differentialdosierwaage gemäß dem Oberbegriff des Patentanspruchs 1 und einer Vorrichtung zur Durchführung des Verfahrens gemäß dem Oberbegriff des Patentanspruchs 7.

Bei Differentialdosierwaagen wird durch ein Austragsorgan fortlaufend eine bestimmte Materialmenge entnommen. Die Materialmenge, die den Behälter pro Zeiteinheit verläßt wird durch Differentation des Behältergewichts bestimmt und stellt die Förderstärke dar. Das gemessene Gewichtssignal besitzt dabei eine Reihe von Störeinflüssen. Dabei bedingen Inhomogenitäten im Materialfluß und nicht lineares Verhalten des Förderorgans Austragsstörungen, die erfaßt und angezeigt werden sollen oder von einer Regelung ausgeglichen werden können. Daneben gibt es eine andere Gruppe von Störungen, die sich zwar auf das Meßsignal auswirken aber keine Austragsschwankungen im Materialfluß bewirken. Diese reinen Meßstörungen rühren z. B. von Gebäudeschwingungen her, die häufig durch schwere vorbeifahrende Fahrzeuge verursacht werden. So kann es auch vorkommen, daß reine Meßstörungen von abgelegten Gegenständen auf der Waage, Berührungen des Wägebehälters durch Bedienungspersonal oder auch durch Windeinflüsse auf dem Wägebehälter herrühren. Da die Anforderung an die Meßgenauigkeit derartiger Differentialdosierwaagen in industriellen Prozessen meist sehr hoch sind, muß dafür Sorge getragen werden, daß die reinen Meßstörungen von den Störungen im Materialfluß unterschieden und aus der Anzeige und einer eventuellen Regelung ausgeblendet werden.

Aus der EP 0 291 553 B1 ist ein derartiges Verfahren zur Störausblendung bei einer Differentialdosierwaage bekannt, bei dem aus den Meßwerten der Vergangenheit ein Schätzwert für die Zukunft gebildet wird.

Dabei wird das Gewichtssignal in kurzen zeitlichen Abständen fortlaufend abgetastet und mit Hilfe einer Auswerteeinrichtung die Differenz des jeweils gemessenen Gewichtssignals mit dem vorher ermittelten Schätzwert verglichen. Überschreitet der Abstand zwischen dem Schätzwert und dem gemessenen Gewicht einen festgelegten Toleranzbereich, so wird eine reine Meßstörung festgestellt und der Schätzwert als Grundlage einer Regelung und Anzeige verwandt. Bei einer derartigen Störausblendung werden allerdings nur reine Meßstörungen erfaßt, die den Toleranzbereich zwischen dem Schätzwert und dem jeweils gemessenen Gewichtswert überschreiten. Insbesondere sind solche Meßstörungen, die innerhalb des Toleranzbereiches liegen oder sich zeitlich relativ langsam aufbauen, mit einer solchen Störausblendung nicht erfaßbar.

Der Erfindung liegt deshalb die Aufgabe zugrunde, ein Verfahren und eine Vorrichtung zur Störausblendung bei einer Differentialdosierwaage der eingangs genannten Art so zu verbessern, daß die Dosiergenauigkeit dadurch erhöht wird, daß auch innerhalb des Toleranzbereiches liegende Meßstörungen weitgehend ausgeblendet werden.

Diese Aufgabe wird durch die im Patentanspruch 1 und im Patentanspruch 7 angegebene Erfindung gelöst. Weiterbildungen und vorteilhafte Ausführungsbeispiele der Erfindung sind in den Unteransprüchen angegeben.

Die Erfindung hat den Vorteil, daß insbesondere kleine Meßstörungen bei derartigen Differentialdosierwaagen ausblendbar sind. Dies ist insbesondere deshalb vorteilhaft, weil bei solchen empfindlichen Wägesystemen bereits verhältnismäßig geringe Luftströmungen oder Vibrationen des Untergrundes registriert werden und zu fehlerhaften Ergebnissen führen. Eine derartige Waage ist nach derzeitigen Genauigkeitsanforderungen ohne eine Störausblendung deshalb nicht mehr zu betreiben.

Durch das erfinderische Verfahren ist deshalb auch bei geringen Schwankungen des Gewichts- bzw. Förderstärkensignals durch die Anwendung von Fuzzy-Regeln ein weitgehend der Meßstörung entsprechender Anteil ausblendbar.

Darüber hinaus hat die Erfindung bei einer besonderen Ausführungsart noch den Vorteil, daß auf einfache Art und Weise reine Meßstörungen erkannt und berücksichtigt werden können, obwohl gleichzeitig eine Sollwertänderung durchführbar ist. So ist die Fuzzy-Logik so auf die Regelstrecke abgestimmt, daß im Bereich der Sollwertänderungen nur der, der Sollwertänderung überschießende Teil als Meßstörung bewertet und nach den Fuzzy-Regeln ausgeblendet wird.

Bei einer anderen Ausführungsart der Erfindung ist es insbesondere bei kleinen Störeinflüssen des Gewichts- bzw. Förderstärkensignals vorteilhaft, daß aus der zeitlichen Entwicklung der Abweichungen eine unscharfe Prognose über Art und Größe einer möglichen Meßstörung nach den Fuzzy-Regeln abgeleitet wird, die eine Aussage über die Störungsgewißheit bildet.

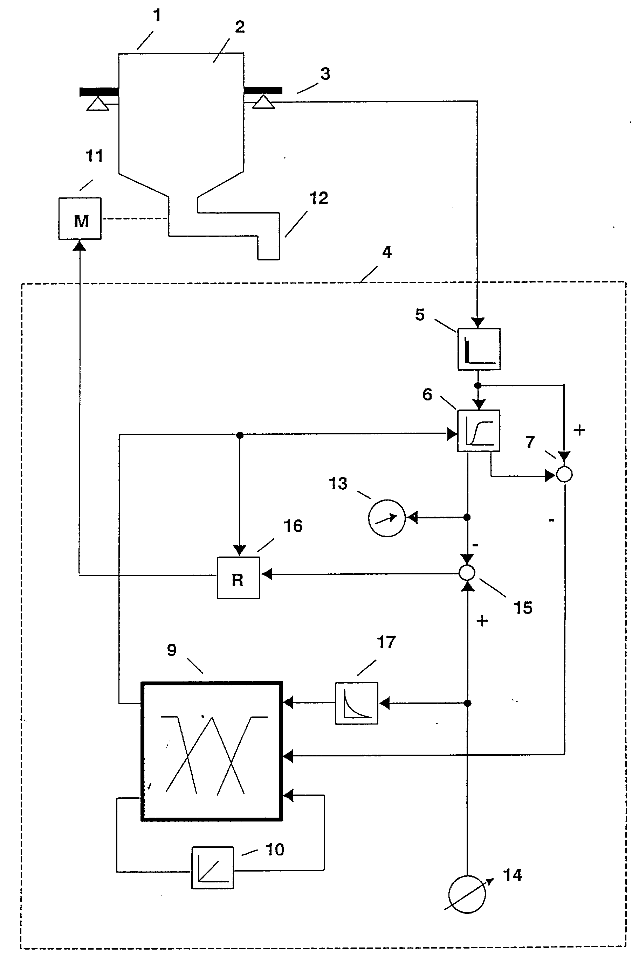

Die Erfindung wird anhand eines Ausführungsbeispiels, das in der Zeichnung dargestellt ist, näher erläutert. Die Zeichnung zeigt eine schematische Darstellung einer Wägevorrichtung 1 und das Blockschaltbild einer Auswertevorrichtung 4 zur Störausblendung und Regelung der Wägevorrichtung 1 als Differentialdosierwaage.

In der Zeichnung ist schematisch eine Wägevorrichtung 1 dargestellt, die sich auf Wägezellen 3 abstützt, die mit einer Auswertevorrichtung 4 verbunden sind und in der die Ausgangssignale der Wägezellen 3 so ausgewertet werden, daß das Austragsorgan 12 der Wägevorrichtung 1 so gesteuert wird, daß der Materialaustritt der vorgegebenen Förderstärke entspricht und entsprechend angezeigt wird.

Die Wägevorrichtung 1 besteht aus einem Vorratsbehälter 2, einem Austragsorgan 12, das als Schneckenförderer ausgebildet ist und von einem Antriebsmotor 11 kontinuierlich angetrieben wird. Die ganze Wägevorrichtung 1 stützt sich auf zwei dargestellte Wägezellen 3 ab, die kontinuierlich ein Ausgangssignal erzeugen. Derartige Wägevorrichtungen 1 werden in der Regel zum kontinuierlichen Dosieren von Schüttgütern oder anderen Zusatzstoffen als Differenzierdosierwaagen eingesetzt. Dabei kann das Dosierorgan 12 als Dosierschnecke, Schwingförderer oder Bandförderer ausgebildet sein. Das Ausgangssignal der Wägezellen 3 ändert sich entsprechend dem Materialabfluß, der aus dem Austragsorgan befördert wird. Die von den Wägezellen 3 erzeugten Ausgangssignale entsprechen dem Gewicht der Wägevorrichtung 1 und werden der Auswertevorrichtung 4 zugeführt. Diese enthält einen Differenzierer 5, der an seinem Ausgang ein Signal erzeugt, das der Förderstärke der Wägevorrichtung 3 entspricht.

Das Ausgangssignal des Differenzierers 5 wird einem zeitveränderbaren Filter 6 zugeleitet, das die Oberwellen ausfiltert und gleichzeitig eine bewertete Mittelwertbildung vornimmt, so daß an dessen Ausgang ein Signal anliegt, das der mittleren Förderstärke entspricht. Daraus wird gleichzeitig ein Prognosewert errechnet, der zu einem nächstfolgenden Abtastzeitpunkt erwartet wird.

Der Prognosewert des Filters 6 wird einer ersten Vergleichsstelle 7 in der Auswertevorrichtung 4 zugeführt, die gleichzeitig mit dem Ausgang des Differenzierers 5 verbunden ist. In dieser ersten Vergleichsstelle 7 wird zu jedem Abtastzeitpunkt das Förderstärkensignal am Ausgang des Differenzierers 5 mit dem Ausgangssignal des Filters 6 (Prognosewert) verglichen und die Differenz dieser beiden Signale gebildet. Der Wert zwischen dem am Ausgang des Differenzierers 5 anliegenden Förderstärkensignal und dem Prognosewert wird dem Eingang eines Fuzzyschaltkreises 9 zugeleitet. Der Fuzzyschaltkreis 9 bearbeitet den vorgenannten Differenzwert nach einer vorgegebenen Fuzzylogik, die aus der Abweichung eine unscharfe Prognose über die Art und Größe einer möglichen Störung bildet. Daraus wird nach den Fuzzyregeln eine Aussage über die Gewissheit des Vorliegens einer Meßstörung abgeleitet, aus der ein Ausblendungsgrad gebildet wird, der zur Erzeugung eines Ausblendungswerts am Ausgang des Fuzzyschaltkreises 9 dient.

Das dem Ausblendungsgrad entsprechende Signal (Ausblendungswert) wird dem zeitveränderbaren Filter 6 zugeleitet, durch das dessen Zeitkonstante veränderbar ist. Dabei bedeutet ein großer Ausblendungsgrad eine große Beeinflussung der Zeitkonstante des Filters 6, so daß durch das Filter 6 das zum Abtastzeitpunkt ermittelte Förderstärkensignal ganz oder zu einem großen Teil ausgeblendet und dadurch ein modifizierter Prognosewert als Schätzwertsignal erzeugt wird. War hingegen der Wert der Abweichung zwischen dem Prognosewert und dem zum Abtastzeitpunkt erfaßten Förderstärkensignal gering, so erzeugt der Fuzzyschaltkreis 9 nach den Fuzzyregeln nur einen geringeren Ausblendungswert, der die Zeitkonstante des Filters nur wenig beeinflußt.

Dabei wird die Zeitkonstante des Filters 6 nicht beeinflußt, wenn der Prognosewert und der zum Abtastzeitpunkt ermittelte Wert der Förderstärke gleich groß sind. Hingegen wird die Zeitkonstante des Filters 6 bei einem großen Wert der Differenz zwischen dem Prognosewert und dem zum Abtastzeitpunkt ermittelten Förderstärkensignals so stark beeinflußt, daß die Zeitkonstante des Filters 6 gegen unendlich geht, so daß dem nachfolgende Regelkreis der zum vorhergehenden Abtastzeitpunkt ermittelte Prognosewert als Istwert-Signal zur Verfügung steht. Aus dem Prognosewert wird also zum nächstfolgenden Abtastzeitpunkt ein um die Störung bereinigter Wert, der den Schätzwert darstellt und vom Filter 6 zum zweiten Vergleichspunkt 15 geführt.

Der Fuzzyschaltkreis 9 ist dabei so ausgebildet, daß der Differenzwert zwischen dem Prognosewert und dem Ausgangssignal des Differenzierers 5 zum Abtastzeitpunkt den Fuzzygrößen "klein", "mittel" oder "groß" zugeordnet wird. Daraus bildet die Fuzzyschaltung 9 einen Ausblendungsgrad, der bei einer Zuordnung des Differenzwertes zu "groß" immer von einem großen Ausblendungsgrad ausgeht, bei dem ein definierter Ausblendungswert erzeugt wird, der das Filter 6 so steuert, daß an dessen Ausgang quasi das Prognosesignal als Schätzwertsignal anliegt. Bei den Zuordnungen zu "klein" und "mittel" wird ein Ausblendungsgrad ermittelt, der sich aus unterschiedlichen Anteilen "groß", "mittel" und "klein" ergibt und zu einem definierten Ausblendungswert führt, der die Zeitkonstante des Filters 6 so verändert, daß ein neuer Schätzwert entsteht, der ein modifizierten Prognosewert darstellt. Der Vorteil der Ausblendung der Meßstörungen durch die Anordnung eines Fuzzyschaltkreises 9 liegt eindeutig im "kleinen" und "mittleren" Bereich von Störungen, da diese in einem bestimmten Grade ihrer Wahrscheinlichkeit ausgeblendet werden können.

Um eine verläßlichere Aussage über den Ausblendungsgrad beim Vorliegen von "mittleren" und "kleinen" Störungen zu erhalten, steht am Ausgang des Fuzzyschaltkreises 9 noch ein weiteres Signal zur Verfügung, das der Änderung der festgestellten Ausblendungsgrade zwischen zwei oder mehr Abtastzeiträumen entspricht und das in einem Integrierer 10 erfaßt und dem Eingang des Fuzzyschaltkreises 9 wieder zugeführt wird. Dadurch wird das zeitliche Vorliegen der Störung erfaßt und ein Wert gebildet, der zu einer Erhöhung der Meßstörungsgewissheit führt. Denn auch bei länger vorliegenden kleineren Störungen kann ab einem bestimmten Zeitraum mit an Sicherheit grenzender Wahrscheinlichkeit gefolgert werden, daß es sich um eine Meßstörung handelt. Durch die Rückführung in den Fuzzyschaltkreis 9 wird die Sicherheit der Fuzzyauswertung entsprechend dem Grad der Wahrscheinlichkeit erhöht.

Insbesondere bei ansteigenden Differenzwerten im Verlaufe der Abtastzyklen erhöht sich die Wahrscheinlichkeit, daß es sich um eine Meßstörung handelt, so daß der Ausblendungsgrad die Zeitkonstante des Filters 6 so weit erhöht, daß der nachfolgende Regelkreis nach einer gewissen Zeit vorübergehend mit dem Prognosewert als Schätzwert und Istwert-Signal arbeitet. Nach dem Abklingen der Störung wird das Filter wieder in seinen Normalzustand zurückkehren und mit einem Schätzwert arbeiten, der nahezu der Förderstärke zum Abtastzeitpunkt entspricht.

Die Besonderheit des Fuzzyschaltkreises 9 zur Feststellung der Störausblendung bei Differentialdosierwaagen liegt im Grunde darin, daß auch bei kleinen Störungen stets zu einem gewissen Anteil dies als Meßstörung bewertet wird. Dabei können allerdings Meßstörungen, die im Bereich des Rauschens liegen durch geeignete Wahl der Fuzzy-Zugehörigkeitsfunktionen und Regeln berücksichtigt werden.

Inbesondere wird durch den Einsatz der Fuzzylogik erreicht, daß mit zunehmendem Abstand zwischen dem Prognosewert und dem Ausgangssignal des Differenzierers zum Abtastzeitpunkt die Wahrscheinlichkeit zunimmt, daß eine Meßstörung vorliegt, aus der mit Hilfe der Fuzzylogik ein Ausblendungsgrad gebildet wird, bei dem die Störungsgewissheit mit zunehmendem Abstand ansteigt. Dabei kann das Anstiegsverhalten dem tatsächlichen Vorliegen einer Meßstörung angepaßt werden, so daß dadurch ein sehr genaues Meßergebnis der Differentialdosierwaage erreichbar ist. Dies wird insbesondere noch durch die Berücksichtigung des zeitlichen Verlaufs der Störung durch den Intergrierer 10 erreicht.

Der Schätzwertausgang des Filters 6 ist mit einer zweiten Vergleichsstelle 15 verbunden, der gleichzeitig mittels einer Einstellvorrichtung 14 ein vorgehbarer Sollwert zugeführt wird. Diese Vergleichsstelle 15 bildet aus dem Schätzwertsignal des Filters 6 und dem vorgegebenen Sollwert einen Differenzwert, der am Eingang eines Reglers 16 in der Auswertevorrichtung 4 anliegt. Beim Vorliegen einer Differenz bildet der Regler 16 ein Ausgangssignal als Stellgröße, das den Antriebsmotor 11 der Wägevorrichtung entsprechend dem festgestellten Differenzwert steuert.

Der vorgenannte Regelkreis stellt einen gebräuchlichen Soll-Istwertregelkreis dar, der z. B. einen PI- oder auch einen PID-Regler enthält. Um die Stabilität des Regelkreises in allen Fällen zu gewährleisten, werden die Regelparameter abhängig vom Ausblendungsgrad verändert. Das Schätzwertsignal des Filters 6 wird gleichzeitig noch einer Anzeigevorrichtung 13 zugeführt, die die Förderrate der Differentialdosierwaage anzeigt. Hier könnte noch zusätzlich eine Integration vorgenommen werden, so daß eine zusätzliche Anzeige vorsehbar ist, aus der die Fördermenge ablesbar ist.

Zur Unterscheidung von Sollwertänderungen und Meßstörungen ist die Einstellvorrichtung 14 über ein Zeitglied 17 mit dem Eingang des Fuzzyschaltkreises 9 verbunden. Das Zeitglied 17 bildet hier das Einschwingverhalten der Regelstrecke nach.

Im Fuzzyschaltkreis 9 wird das Zeitgliedsignal mit dem Wert des Abstandes zwischen der Prognose und dem Ausgangssignal des Differenzierers 5 zum Abtastzeitpunkt verknüpft, so daß der Fuzzyschaltkreis 9 zur Störausblendung den Unterschied zwischen der Sollwertänderung und dem Wert der Differenz zwischen der Prognose und dem Ausgangssignal des Differenzierers 5 zum Abtastzeitpunkt berücksichtigt.

Die Auswertevorrichtung 4 zu der Differentialdosierwaage ist für alle Ausführungen von Differentialdosierwaagen einsetzbar. Dabei kommt es nicht darauf an, ob die Differentialdosierwaage als Austragsorgan eine Dosierschnecke, ein Schwingförderer oder ein Förderband enthält, da alle diese Austragsorgane einen elektrischen Antrieb zur Steuerung der Förderstärke bzw. der Fördermenge verwenden. In der Auswertevorrichtung 4 sind der Differenzierer 5, das Filter 6, die erste Vergleichsstelle 7, der Fuzzyschaltkreis 9, der Integrierer 10, die zweite Vergleichsstelle 15 und der Regler 16 integriert. Es wäre aber auch denkbar, daß die gesamte Auswertevorrichtung 4 oder einzelne Schaltkreise der Auswertevorrichtung 4 in den Wägezellen 3 oder anderen Recheneinrichtungen vorgesehen werden. Gleichfalls könnte man die Funktion der einzelnen Schaltkreise der Auswertevorrichtung 4 auch durch programmierbare Rechenschaltungen verwirklichen, deren Software der Funktionsweise der beschriebenen Schaltkreise entspricht.

Die Auswertevorrichtung ist auch so ausbildbar, daß die Störausblendung für eine ungeregelte Differentialdosierwaage einsetzbar ist. Dazu würde der Regelkreis entfallen, so daß die Störausblendung die Störung lediglich aus der Förderstärkenanzeige bzw. Fördermengenanzeige ausblenden würde.

## Patentansprüche

1. Verfahren zur Störausblendung bei einer Differentialdosierwaage, bei der das Ausgangssignal einer Wägevorrichtung fortlaufend oder in vorgegebenen Abständen erfaßt und daraus die Förderstärke gebildet wird, wobei reine Meßstörungen aus dem Ausgangssignal oder der Förderstärke ausgeblendet werden, dadurch gekennzeichnet, daß aus der Größe der Ausgangssignaländerungen oder der Förderstärkenänderungen nach den Fuzzyregeln eine unscharfe Zuordnung getroffen und daraus ein Ausblendungsgrad erzeugt wird, der den Meßstörungsanteil aus dem Ausgangssignal oder der Förderstärke ausblendet.

2. Verfahren nach Patentanspruch 1, dadurch gekennzeichnet, daß die Ausgangssignale der Wägevorrichtung (1) einer Auswertevorrichtung (4) zugeführt werden, die aus den Ausgangssignalen der Vergangenheit einen Prognosewert bildet, der mit dem Ausgangssignal im Abtastzeitpunkt verglichen und daraus ein Differenzwert gebildet wird, dessen Wert der Größe der Ausgangssignaländerungen der Wägevorrichtung (1) oder den Förderstärkenänderungen entspricht.

3. Verfahren nach Patentanspruch 1 oder 2, dadurch gekennzeichnet, daß der Differenzwert mittels einer Fuzzylogik so ausgewertet wird, daß eine Zuordnung als unscharfe Störungsgröße nach "klein", "mittel" und "groß" erfolgt, woraus ein Ausblendungsgrad gebildet wird, der bei der Zuordnung nach "groß" stets groß ist und nach den Zuordnungen "klein" und "mittel" sowohl klein, mittel oder groß oder anteilig davon sein kann und der dem Meßstörungsanteil entspricht und in diesem Maße aus dem Ausgangssignal oder der Förderstärke ausgeblendet wird.

4. Verfahren nach wenigstens einem der vorhergehenden Ansprüche, dadurch gekennzeichnet, daß der zeitliche Verlauf der Änderungen der ermittelten Ausblendungsgrade erfaßt und bei der Auswertung nachfolgender Differenzwerte mit berücksichtigt wird und zu einer Erhöhung der Meßstörungsgewißheit führt.

5. Verfahren nach wenigstens einem der vorhergehenden Ansprüche, dadurch gekennzeichnet, daß der zeitliche Verlauf der Änderungen der Ausblendungsgrade dadurch berücksichtigt wird, daß die ermittelten Änderungen der Ausblendungsgrade während vergangener Abtastperioden integriert und mit dem Differenzwert im jeweiligen Auswertezyklus mittels Fuzzyregeln verknüpft werden.

6. Verfahren nach wenigstens einem der vorhergehenden Ansprüche, dadurch gekennzeichnet, daß die ermittelte Förderstärke (Istwert) mit einem vorgegebenen Wert (Sollwert) verglichen und bei einer Abweichung aufgrund einer Austragsstörung eine Regelung der Förderstärke vorgenommen wird, wobei aus der Größe der Förderstärkenänderungen nach den Fuzzyregeln eine unscharfe Zuordnung nach Art und Größe der Störung getroffen und daraus ein Ausblendungsgrad erzeugt wird, der den Meßstörungsanteil aus der Regelung ausblendet.

7. Vorrichtung zur Störausblendung bei einer Differentialdosierwaage zur Durchführung des Verfahrens nach einem der Ansprüche 1 bis 6 mit folgenden Merkmalen,
- es ist eine Wägevorrichtung vorgesehen, die aus einem Vorratsbehälter, einem Dosierorgan, und einem Antrieb besteht, und die auf Wägezellen abgestützt ist, und
- es ist eine Auswertevorrichtung vorgesehen, die einen Differenzierer zur Ermittlung der Förderstärke, ein Filter zur Ermittlung der Prognose und des Schätzwertes, und eine erste Vergleichsstelle zum Vergleich und Differenzbildung der Prognose mit dem Förderstärkensignal zum Abtastzeitpunkt, enthält,
dadurch gekennzeichnet, daß die Auswertevorrichtung (4) einen Fuzzyschaltkreis (9) enthält, der zur Auswertung des Differenzwertes dient und der aus der Größe des Differenzwertes eine unscharfe Zuordnung vornimmt und daraus einen Ausblendungsgrad ermittelt, der die Zeitkonstante des Filters (6) steuert und dadurch am Ausgang des Filters (6) einen Schätzwert bildet, der ein Signal darstellt, aus dem der Meßstörungsanteil ausgeblendet ist.

8. Vorrichtung nach Anspruch 7, dadurch gekennzeichnet, daß die Auswertevorrichtung (4) einen Integrierer (10) enthält, der mit dem Ausgang des Fuzzyschaltkreises (9) verbunden ist und den zeitlichen Verlauf der Änderung des Ausblendunggrades integriert und zur Verknüpfung mit dem Differenzwert zum nächstfolgenden Abtastzeitpunkt dient und entsprechend der Fuzzyregeln auswertbar ist und dadurch die Meßstörungsgewißheit erhöht.

9. Vorrichtung nach wenigstens einem der Ansprüche 7 bis 8, dadurch gekennzeichnet, daß die Auswertevorrichtung (4) einen Regelkreis enthält, der aus einem Regler (16), einer zweiten Vergleichsstelle (15) und einer Einstellvorrichtung (14) besteht, der den Schätzwert zum Abtastzeitpunkt mit einem vorgegebenen Sollwert vergleicht und daraus eine Stellgröße bildet, die den Antrieb (11) der Wägevorrichtung (1) entsprechend der Förderstärkenänderungen steuert, wobei durch den Schätzwert der Meßstörungsanteil aus dem Regelkreis ausblendbar ist.

10. Vorrichtung nach Anspruch 7 oder 8, dadurch gekennzeichnet, daß eine Einstellvorrichtung (14) vorgesehen ist, mit der ein Sollwert vorgebbar ist, der in der Auswertevorrichtung (4) über das Zeitglied (17) mit dem Eingang des Fuzzyschaltkreises (9) verbunden ist und bei einer Sollwertänderung im Fuzzyschaltkreis (9) so mit dem Differenzwertsignal verknüpft wird, daß die Sollwertänderung nicht als Meßstörung ausgewertet wird.

11. Vorrichtung nach einem der Ansprüche 7 bis 9, dadurch gekennzeichnet, daß die Auswertevorrichtung (4) als programmierbare Rechenschaltung ausgebildet ist, bei der die Funktion des Differenzierers (5), des Filters (6), der ersten Vergleichsstelle (7), des Zeitgliedes (17), des Fuzzyschaltkreises (9), des Integrierers (10), der zweiten Vergleichsstelle (15) und des Reglers (16) durch eine entsprechende Software vorgegeben ist.

## Claims

1. A method of removing disturbances in a differential feed weighing machine in which the output signal of a weighing device is recorded continuously or at preset intervals and the feed capacity is formed therefrom, wherein pure measuring disturbances are removed from the output signal or the feed capacity, characterised in that from the magnitude of the output signal changes or the changes in the feed capacity a poorly defined rating is made according to poorly fuzzy rules, and a degree of extraction is generated therefrom which extracts the measuring disturbance component from the output signal or from the feed capacity.

2. A method according to Claim 1, characterised in that the output signals of the weighing device (1) are fed to an evaluating device (4) which, from the past output signals, forms a prognosis value which is compared with the output signal at the sampling instant, and a difference value is formed therefrom, the value of which corresponds to the magnitude of the changes in the output signal of the weighing device (1) or the changes in the feed capacity.

3. A method according to Claim 1 or 2, characterised in that the difference value is evaluated in accordance with fuzzy logic in such manner that a rating as fuzzy disturbance level in terms of "low", "medium" and "high" is made, wherefrom a degree of extraction is formed which in the case of the "high" rating is always high and in the case of the "low" and "medium" ratings can be either low, medium or high or a combination thereof, and which corresponds to the measuring disturbance component and is extracted to this extent from the output signal or from the feed capacity.

4. A method according to at least one of the preceding claims, characterised in that the time characteristic of the changes in the determined degrees of extraction is recorded and additionally taken into consideration in the evaluation of following difference values and leads to an increase in the measuring disturbance certainty.

5. A method according to at least one of the preceding claims, characterised in that the time characteristic of the changes in the degrees of extraction is taken into consideration in that the determined changes in the degrees of extraction during past sampling periods are integrated and are coupled with the difference value in the respective evaluation cycle in accordance with fuzzy logic rules.

6. A method according to at least one of the preceding claims, characterised in that the determined delivery rate (actual value) is compared with a preset value (derived value) and in the event of a deviation due to a delivery disturbance a regulation of the feed capacity is performed whereby, on the basis of the magnitude of the feed capacity changes, a poorly defined rating of the disturbance in terms of type and magnitude is made according to fuzzy logic rules, and a degree of extraction is generated therefrom which extracts the measuring disturbance component from the regulation process.

7. A device for removing disturbances in a differential feed weighing machine for the implementation of the method according to one of Claims 1 to 6 having the following features:
- a weighing device is provided which comprises a supply container, a metering element and a drive means and which is supported on weighing cells and
- an evaluating device is provided comprising a differentiator for determination of the feed capacity, a filter for determination of the prognosis and the estimate value, and a first comparator stage for comparing, and forming the difference between, the prognosis and the delivery rate signal at the sampling instant,
characterised in that the evaluating device (4) comprises a fuzzy logic circuit (9) which serves to evaluate the difference value and which, on the basis of the magnitude of the difference value, makes a poorly defined rating and from this determines a degree of extraction which controls the time constant of the filter (6) and, at the output of the filter (6), thereby forms an estimate value, which represents a signal from which the measuring disturbance component is extracted.

8. A device according to Claim 7, characterised in that the evaluating device (4) comprises an integrator (10) which is connected to the output of the fuzzy logic circuit (9) and integrates the time characteristic of the change in the degreeof extraction and which serves for combining with, the difference value at the following sampling instant and can be evaluated in accordance with fuzzy logic rules and thereby increases the measuring disturbance certainty.

9. A device according to at least one of Claims 7 to 8, characterised in that the evaluating device (4) comprises a control circuit which consists of a controller (16), a second comparator stage (15) and a setting device (14) and which compares the estimate value at the sampling instant with a predetermined derived value and from this forms an adjusting value which controls the drive means (11) of the weighing device (1) in accordance with the changes in the feed capacity, whereby the measuring disturbance component can be extracted from the control circuit by means of the estimate value.

10. A device according to Claim 7 or 8, characterised in that a setting device (14) is provided with which a derived value can be preset which, in the evaluating device (4), is connected via the time function element (17) to the input of the fuzzy logic circuit (9) and in the event of a derived value change in the fuzzy logic circuit (9) is coupled to the difference value signal in such manner that the derived value change is not evaluated as measuring disturbance.

11. A device according to one of Claims 7 to 9, characterised in that the evaluating device (4) is formed as a programmable calculating circuit wherein the functioning of the differentiator (5), the filter (6), the first comparator stage (7), the time function element (17), the fuzzy logic circuit (9), the integrator (10), the second comparator stage (15) and the controller (16) is preset by appropriate software.

## Revendications

1. Procédé pour la suppression des perturbations dans une balance doseuse à différentiel, dans laquelle le signal de sortie d'un dispositif de pesée est détecté en continu ou à intervalles donnés et à partir de ceci est formé le débit, les pures perturbations de mesure dues au signal de sortie ou au débit étant supprimées, caractérisé en ce qu'à partir de la grandeur des variations du signal de sortie ou des variations du débit il est procédé à une corrélation imprécise, suivant les règles du fuzzy et à parti de ceci est produit un degré de suppression, qui supprime la composante des perturbations de mesure dues au signal de sortie ou au débit.

2. Procédé selon la revendication 1, caractérisé en ce que les signaux de départ du dispositif de pesée (1) sont envoyés à un dispositif d'exploitation (4) qui à partir des signaux de départ du passé forme une valeur de pronostic, qui est comparée au signal de départ à l'instant de balayage et à partir de ceci est formée une valeur différentielle, dont la valeur correspond à la grandeur des variations du signal de sortie du dispositif de pesée (1) ou des variations du débit.

3. Procédé selon la revendication 1 ou 2, caractérisé en ce que la valeur différentielle est exploitée au moyen d'une logique fuzzy, de manière qu'il soit procédé à une corrélation en tant que grandeur de perturbation imprécise suivant « petit » « moyen » et « grand », à partir de quoi il est formé un degré de suppression, qui dans la corrélation « grand » est toujours grand et dans les corrélations « petit » et « moyen » peut être petit, moyen ou grand ou un pourcentage de ceci et qui correspond à la composante des perturbations de mesure et qui est supprimé dans cette mesure du signal de départ ou du débit.

4. Procédé selon l'une au moins des revendications précédentes, caractérisé en ce que le déroulement dans le temps des variations des degrés de suppression déterminés est enregistré et est pris en compte lors de l'exploitation des valeurs différentielles suivantes et conduit à un augmentation de la certitude des perturbations de mesure.

5. Procédé selon l'une au moins des revendications précédentes, caractérisé en ce que le déroulement dans le temps des variations des degrés de suppression est pris en compte en ce que les variations déterminées des degrés des suppression pendant des périodes de balayage passées sont intégrées et corrélées à la valeur différentielle pendant le cycle d'exploitation respectif au moyen de règles de fuzzy.

6. Procédé selon l'une au moins des revendications précédentes, caractérisé en ce que le débit déterminé (valeur réelle) est comparé à une valeur donnée (valeur de consigne) et, dans le cas d'un écart en raison d'une perturbation de l'évacuation, il est procédé à une régulation du débit, une corrélation imprécise étant adoptée suivant le type et l'importance de la perturbation à partir de la grandeur des variations du débit, suivant les règles du fuzzy, et à partir de ceci étant produit un degré de suppression qui supprime de la régulation la composante des perturbations de mesure.

7. Dispositif pour la suppression des perturbations dans une balance doseuse à différentiel pour la mise en oeuvre du procédé selon l'une des revendications 1 à 6, présentant les caractéristiques suivantes,
il est prévu un dispositif de pesée qui est constitué d'un réservoir, d'un organe doseur et d'un mécanisme d'entraînement et qui s'appuie sur des cellules de pesée, et
il est prévu un dispositif d'exploitation, qui comprend un différenciateur pour déterminer le débit, un filtre pour déterminer le pronostic et la valeur d'estimation, ainsi qu'un premier point de comparaison pour la comparaison et la formation de différences du pronostic avec le signal de débit à l'instant de balayage,
caractérisé en ce que le dispositif d'exploitation (4) contient un circuit de fuzzy (9), qui sert à l'exploitation de la valeur différentielle et qui procède à une corrélation imprécise à partir de la valeur de la grandeur différentielle et détermine à partir de ceci un degré de suppression, qui commande la constante de temps du filtre (6) et forme ainsi à la sortie du filtre (6), une valeur d'estimation, qui constitue un signal, à partir duquel la composante des perturbations de mesure est supprimée.

8. Dispositif selon la revendication 7, caractérisé en ce que le dispositif d'exploitation (4) contient un intégrateur (10) qui est relié à la sortie de circuit de fuzzy (9) et qui intègre le déroulement dans le temps de la variation du degré de suppression et qui sert à la corrélation avec la valeur différentielle à l'instant de balayage suivant et qui est exploitable suivant les règles du fuzzy et accroît ainsi la certitude des perturbations de mesure.

9. Dispositif selon l'une au moins des revendications 7 et 8, caractérisé en ce que le dispositif d'exploitation (4) contient un circuit de régulation, qui est constitué d'un régulateur (16), d'un deuxième point de comparaison (15) et d'un dispositif de réglage (14), qui compare la valeur d'estimation à l'instant de balayage à une valeur de consigne donnée et forme à partir de ceci une grandeur de réglage, qui commande le mécanisme d'entraînement (11) du dispositif de pesée (1) en fonction des variations du débit, la composante des perturbations de mesure pouvant être supprimée du circuit de régulation, par la valeur d'estimation.

10. Dispositif selon la revendication 7 ou 8, caractérisé en ce qu'il est prévu un dispositif de réglage (14), avec lequel peur être imposée une valeur de consigne, qui est reliée dans le dispositif d'exploitation (14), par l'organe de temps (17), à l'entrée du circuit de fuzzy (9) et qui en cas de variation de la valeur de consigne dans le circuit de fuzzy (9) est corrélée au signal de valeur différentielle, de manière que la variation de la valeur de consigne ne soit pas interprétée comme une perturbation de mesure.

11. Dispositif selon l'une des revendications 7 à 9, caractérisé en ce que le dispositif d'exploitation (4) est conçu en tant que circuit de calcul programmable, dans lequel la fonction du différenciateur (5), du filtre (6), du premier point de comparaison (7), de l'organe de temps (17), du circuit de fuzzy (9), de l'intégrateur (10), du deuxième point de comparaison (15) et du régulateur (16) est imposée par un logiciel correspondant.
